# EUROPEAN PATENT APPLICATION

(11) **EP 1 123 987 A1**
(43) Date of publication of application: **16.08.2001**
(21) Application number: 01301061.6
(22) Date of filing: 07.02.2001
(51) Int. Cl.: C23C 10/02

(54) **Repairable diffusion aluminide coatings**

(30) Priority: 11.02.2000 US 502564
(71) Applicant: GENERAL ELECTRIC COMPANY, Schenectady, NY 12345 (US)
(72) Inventor: Rosenzweig, Mark Alan, Hamilton, Ohio 45011 (US); Farr, Howard John, Blue Ash, Ohio 45242 (US); Mantkowski, Thomas Edward, Madeira, Ohio 45243 (US)
(74) Representative: Szary, Anne Catherine, Dr.

(57) **Abstract**

An aluminide coating system is used to restore the aluminide coating to turbine airfoils undergoing refurbishment. The system develops and restores the aluminide coating system without consuming the base metal of the airfoil undergoing repair. The system of the present invention first requires the deposition of a layer of elemental metal over the cleaned substrate, the deposited metal being matched to the composition of the substrate and which will combine with aluminum during a subsequent aluminiding treatment to form the protective aluminide coating. The deposited thickness must be limited to a thickness that will not result in excessive voiding during subsequent thermal processing.

## Description

This invention applies generally to coating systems and specifically to coating systems used to repair or refurbish turbine airfoils removed from service.

The current coatings used on components exposed to the hot gases of combustion in gas turbine engines for both environmental protection and as bond coats in thermal barrier coating (TBC) systems include aluminides of nickel and platinum. These coatings are applied over substrate materials, typically nickel-based and cobalt based superalloys, to provide protection against oxidation and corrosion attack. Although the superalloys have been developed to optimize creep-rupture properties and thermal fatigue resistance, the superalloys require the use of these coatings to enhance their life expectancy in the hostile environment of an aircraft engine. These coatings are formed on the substrate in a number of different ways that involve exposing the superalloy base component to a gaseous atmosphere of an aluminum containing species. The aluminum vapors reduce at the metal surface of the component, depositing aluminum. The aluminum diffuses into the substrate at the elevated temperatures used for the coating process. The aluminum deposited on the exterior of the component reacts with atomic species present in the superalloy component to form new phases. For example, a coating of nickel aluminide, NiAl, typically is formed as an outer coat on a nickel base superalloy by the combination of nickel diffusing outward from the substrate with the deposited aluminum at elevated temperatures. The aluminum diffuses into the substrate and combines with the nickel to form the outer coating of NiAl. A platinum aluminide (PtAl) coating can be formed by electroplating platinum over the superalloy substrate to a predetermined thickness. Then, exposure of the platinum to a gaseous aluminum species at elevated temperatures causes the formation of an outer layer of PtAl as the aluminum is deposited and diffuses into and reacts with the platinum. At the same time, an atomic species such as Ni diffuses outward from the substrate, while aluminum diffuses inward through the platinum. Thus, complex structures of (Pt,Ni) Al are formed by exposing a substrate electroplated with Pt to an atmosphere rich in aluminum at elevated temperatures. As the aluminum diffuses inward toward the substrate and Ni diffuses outward through the Pt, PtAlₓ phases precipitate out of solution so that the resulting Pt-NiAl intermetallic also contains precipitates of PtAlₓ intermetallic, where x principally is 2.

Aluminides are also used as bond coats in thermal barrier systems, being intermediate between the substrate and an additional thermally resistant ceramic coating such as yttria-stabilized zirconia (YSZ) which is applied over the aluminide. However, the process for forming these diffusion aluminides is essentially the same, that is to say, the substrate is exposed to aluminum, usually by a pack process or a CVD process at elevated temperatures, and the resulting aluminide is grown into the surface.

Over time in the hot gaseous environment of a gas turbine engine, the coatings, whether applied as an environmental coating or as a bond coat in a thermal barrier system eventually degrade as a result of one or a combination of ongoing processes: erosion due to the impingement of hot gases on the airfoils; corrosion due to reaction of contaminants in the products of combustion with the airfoil surfaces; and oxidation. In order to repair an airfoil after service, it is necessary to remove not only the corrosion products and oxidation products, but also the previously applied coatings, if they haven't already been removed. Even though aluminum is deposited, typically to a thickness of 0.0005 (0.5 mils) inches to perhaps 0.0015 inches (1.5 mils), the coating consumes base metal. Thus, a deposit of aluminum of 0.5-1.5 mils may result in a coating of perhaps 2-3 mils in thickness, the difference between deposited aluminum and coating thickness being base metal consumed in forming the aluminide. Additionally, during operation of the engine at high temperatures, the diffusion process will continue, causing the coating to grow and consume additional superalloy substrate. In some cases, the coating has grown up to 0.008 inches (8 mils)

Because the coatings are grown into the substrate by a diffusion process and must be removed for refurbishment and repair, this involves removing a portion of what was once substrate material. Typically, the coatings are chemically stripped from the substrate as part of the refurbishment and repair process. Because the parts are thinner as a result of this cycle, this coating and refurbishment/repair process is self-limiting. Design requirements do not permit violation of minimum allowable wall thicknesses. Currently, on some models of turbine airfoils only a few cycles of refurbishment and repair can be achieved, and on some models, only one refurbishment cycle can be accomplished on turbine airfoils. As thinner turbine components are manufactured, it may not be possible to accomplish even one refurbishment and repair cycle. This is clearly undesirable, as the intricate design of these turbine components and the exotic superalloy materials utilized makes the components extremely expensive.

What is desired is a method of forming protective aluminide coatings on turbine components for use in gas turbine service in which the growth of the coating into the substrate is either eliminated or minimized.

The present invention is directed to an aluminide coating system that is used to restore the aluminide coating to turbine airfoils that have been removed from service. Because the airfoils are generally thin walled components, the coating system of the present invention develops the aluminide coating system without consuming the base metal that provides the structural integrity of the thin-walled component.

Although the present invention can be used in the application of aluminide coatings in any application wherein the dimensions of the base material must be maintained, the need to maintain dimensional integrity is most often encountered on turbine components, such as thin-walled airfoils, nozzles and shrouds removed from service from the turbine portion of an aircraft engine. Repair of these turbine components typically requires the removal of previously applied diffusion aluminide coatings, followed by the repair of any defects such as cracks by the appropriate process. Because these protective aluminide coatings are grown into the surface of the turbine component by a diffusion process, and because high temperature service may cause additional growth of the aluminide coating into the substrate, the removal of the coating inherently involves a removal of at least that portion of the base metal of the component that was consumed in forming the protective aluminide coating.

The present invention facilitates the formation of a new protective aluminide coating by minimizing the amount of metal diffusing from the base material to interact with aluminum to form the new aluminide coating. The present invention entails applying a layer of elemental metal over the surface of the turbine component over which the aluminide coating must be formed, the elemental metal applied being matched to the substrate composition. This metal is an elemental metal that will combine with aluminum applied during an aluminiding treatment to form the protective aluminide coating and is applied in thicknesses that are not so great that excessive voiding forms on thermal processing. The elemental metal applied to the outer surface of the substrate will combine with aluminum applied during exposure to the gaseous aluminum to form a protective aluminide coating. The aluminide coating can be formed by interaction with the applied metal in the conventional manner by any conventional aluminiding treatment.

An advantage of the present invention is that a protective aluminide coating can be a substrate surface that does not rely on diffusion of metal from the substrate for formation of the coating. This invention permits the repair of components removed from service without the consumption of any additional substrate base metal. This will permit the reuse of thin-walled castings that may not otherwise be repairable. When the present invention is used to form aluminide coatings on new components, the life of the turbine components can be increased as the number of repair cycles that the turbine component can undergo is also increased.

Another advantage of the present invention is that a layer of metal that is applied over the substrate can readily be applied to turbine components using existing technology with a minimal amount of effort and at low cost.

Still another advantage of the present invention is that the composition of the diffusion aluminide coating can more readily be controlled by matching the applied elemental metallic layer with the superalloy composition of the component substrate. Unlike the superalloy substrates that can contain alloying elements that, although necessary, are not beneficial to the environmental resistance of the environmental coating, the layer applied over the substrate surface can be closely controlled so that a higher purity aluminide coating relatively free of undesirable elements is formed. This high purity coating that is initially formed over the substrate has improved environmental resistance as a result of the freedom from elements that can cause deterioration in the in the protective nature of the aluminide.

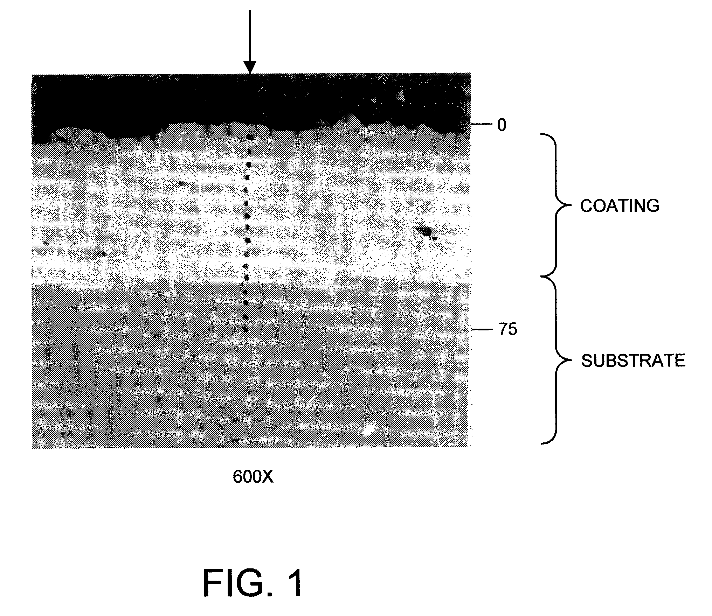

Fig. 1 is a micrograph of the present invention depicting the microstructure of a coating prepared in accordance with the present invention including optional platinum to form a platinum aluminide/nickel aluminide coating.

In a preferred embodiment the present invention comprises depositing a thin layer of a metal selected
from the group consisting of Co or Ni over the surface of a turbine engine component substrate such as an airfoil prior to the formation of a protective aluminide coating. The selection of Co or Ni is dependent upon the composition of the substrate. Typically components such as airfoils, nozzles, shrouds and vanes are manufactured of superalloys, and frequently well-known Ni-based superalloys such as Rene' 80, Rene' N5, Rene' 142, Rene 125, IN 738, B1900, PWA 1480 and PWA 1422 and cobalt-based superalloys such as MAR-M-509 and X-40. These superalloys include a number of alloying elements. The nominal composition of Rene' 142 by weight is about: 12% Co, 6.1% Al, 6.8% Cr, 6.4% Ta, 5%W, 1.5% Mo, 2.8% Re, 1.5% Hf, 0.12% C, 0.015% B, with the balance Ni and incidental impurities. In this alloy, Al is present to promote the formation of the gamma prime in the matrix and not for formation of aluminide coatings. Other nickel-based superalloy substrate materials include similar elements in varying weight percentages, while cobalt-based superalloy substrates will include a balance of cobalt in combination with other elements.

In accordance with the present invention, when Co or Ni is applied over the surface of a cobalt-based substrate component or a nickel-based substrate component, it serves initially as a new surface into which aluminum is subsequently deposited and a protective aluminide coating is grown. The aluminum diffuses inward into either pure nickel or cobalt to form a uniformly pure aluminide believed to provide improve oxidation protection compared to an aluminide formed by diffusion inward into a superalloy that includes a number of alloying additions. As a result, these alloying elements that can include Ta, Ti, W, Mo and S are not available to form alloying complexes and are not available at the coating surface to deterimentally affect environmental resistance. Of course, as is well known in the gas turbine arts, the aluminide coating may serve as an environmental coating for such an airfoil, or it may serve as a bond coat underlying a thermal barrier topcoat.

When the engine is taken out of service for repair or refurbishment, it is necessary to remove existing coatings, as well as any oxidation or combustion products that may have formed on the outer surfaces of the turbine component parts in order to accomplish a refurbishment. Thus, in the present invention, the applied metal is sacrificial in that the cobalt or nickel that is applied in conjunction with the aluminum used to form the aluminide protective coating minimizes the amount of substrate material consumed as a result of diffusion and that is removed during refurbishment. Of course, for existing turbine components, the Ni or Co may be applied to the substrate after removal of the existing coatings, which have been grown into the substrate using existing procedures. This added metal will replace the removed substrate material and permits a new protective coating to be grown into the added metal rather than directly into the substrate, which has already experienced thinning as a result of conventional aluminiding and removal. In addition, the added metal acts as a diffusion barrier to limit the inward migration of Al so that a minimal amount of substrate is consumed in forming the protective aluminide coating and during service.

In an optional embodiment, platinum, Pt, may be deposited over the initial elemental layer, Ni in nickel-based superalloys and Co in cobalt-based superalloys. The thickness of the platinum is less than 0.0005 inches and preferably is between about 0.0001-0.0003 inches. This deposition is followed by a conventional aluminiding treatment. In these embodiments, a high purity aluminide coating layer consisting of platinum aluminide and nickel aluminide is formed over nickel-base superalloy substrates, while a high purity aluminide coating layer consisting of platinum aluminide and cobalt aluminide is formed over cobalt-base superalloy substrates

The thin layer of elemental metal is applied by any conventional technique that produces a high purity layer of metal. Electroplating is known to produce a cost effective layer of controlled thickness. This method is very effective for application of nickel, cobalt and platinum. Other methods of application of the high purity layer of metal are chemical vapor deposition (CVD) and physical vapor deposition methods such as sputtering. The manufacturing advantages that may be achieved from a particular method will ultimately determine which method is selected, as cost, purity and subsequent additional processing will vary from one application to the next. In the preferred embodiment, the elemental metal is applied to a thickness such that void formation does not occur within the coating. This thickness is typically a maximum of 0.006 inches, and most preferably between about 0.0005-0.002 inches. If the elemental metal is combined with optional platinum, then the thickness of applied metal is increased by a maximum of 0.0005 inches, and preferably between 0.0001-0.0003 inches.

When Pt is applied over a prior coating of Ni or Co, a diffusion heat treatment is usually performed at a temperature in the range of about 1700-1975°F (927-1079°C) for a time of about 2 hours.

The elemental coatings are aluminided at a preselected temperature for a preselected time by exposure to a gaseous aluminum phase by any well known process. The preselected temperature is between 1850°F to about 2100° and the preselected time is at least one hour. Longer times are typically required for lower temperatures to achieve similar results. In a preferred embodiment, the preselected temperature is 1950 ± 25°F (1066 ± 14°C) for a period of time of 5-6 hours.

### Example 1

Several diffusion aluminide coatings were prepared using coupons of a nickel-based superalloy, Rene' 142. Nickel was electroplated onto the coupons to thicknesses of between about 0.0005 inches (13 microns) to about 0.002 inches (50 microns) in a nickel sulfamate bath. Control coupons were not heat treated, while other coupons were vacuum heat treated at preselected temperatures of 1850°F (1010°C), 1975°F (1080°C), and 2100°F (1150°C), for preselected times of between about one to four hours. Although the preselected time will vary dependent on the temperature, higher temperatures dictating shorter times, the minimum time is about 1 hour. The coupons were then given a single phase PtAl aluminiding treatment by depositing platinum plating to a thickness of about 0.0003 inches (7 microns), followed by a diffusion heat treatment at 1925°F (1052°C) for about 2 hours followed by deposition of aluminum in a gaseous aluminum atmosphere at a temperature of 1975°F (1080°C) for about 6 hours using 300 grams of an activator such as aluminum fluoride in argon at a flow rate of 150 scfh.

While all of the applied nickel layers produced voiding at the original base metal interface, the voiding was found to be reduced to acceptable levels at nickel thicknesses of 0.001 inches (25 microns) and less when no heat treating was performed on the nickel layer. A coupon that was processed to a 0.001 mil thickness, with no intervening heat treatment, was then coated with a platinum aluminide using the procedure set forth above. The composition of this coupon was evaluated using an electron microprobe. The microprobe date is provided in Table 1. The microstructure of the coupon is shown in Fig. 1.

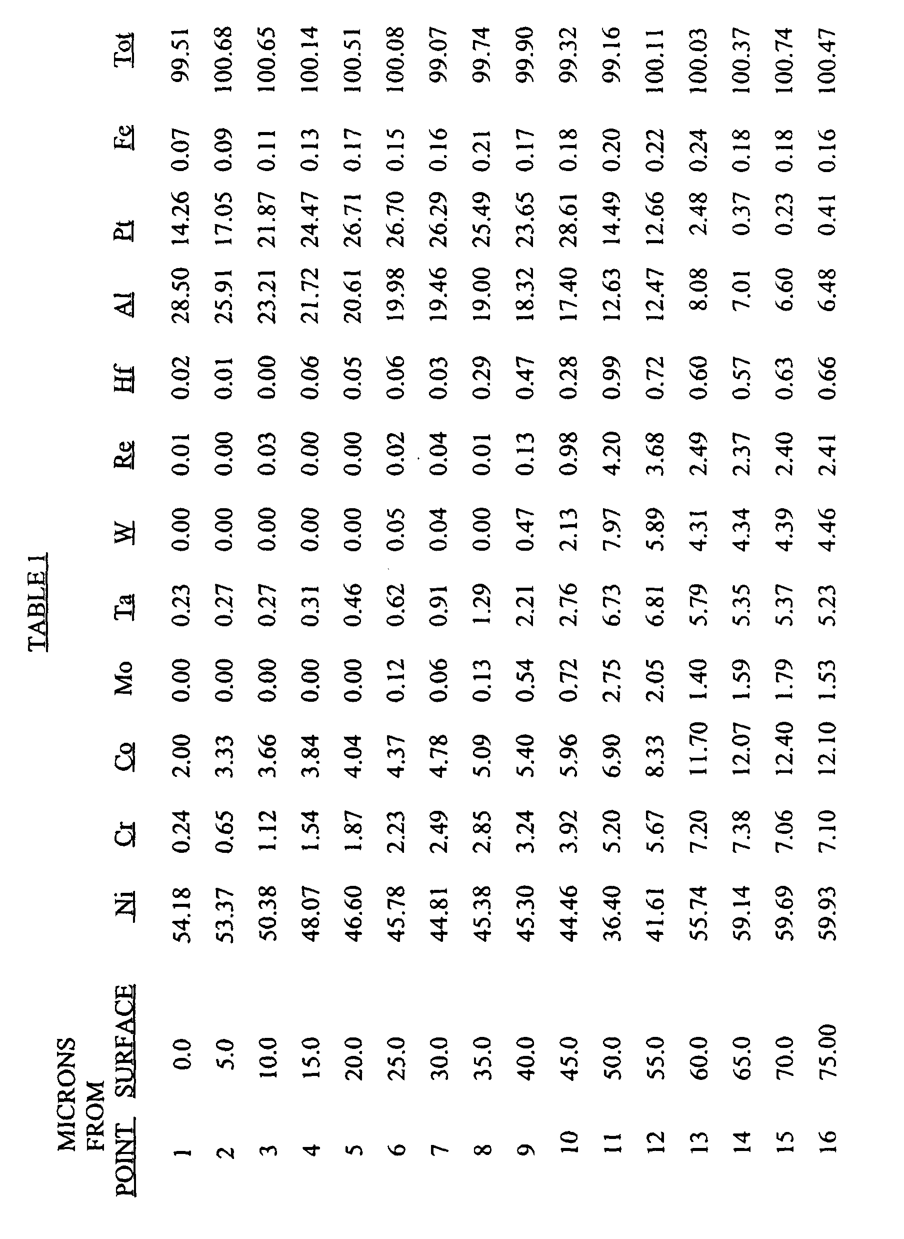

### Example 2

Rene 142 coupons were prepared by nickel plating in a nickel sulfamate bath to a thickness of 0.001 inches (25 microns) of nickel. No diffusion heat treatment was performed after nickel plating. The coupons were then platinum plated to a thickness of 0.00028 inches (7 microns), diffusion heat treated at a temperature of about 1925°F (1052°C) for about 2 hours, and then aluminided to a single phase (Ni,Pt) Al structure using a thermal cycle of 1950°F ± 25°F (1066 ± 14°C) for about 5 hours. The coupons were then coated with about 0.005 inches of a PVD thermal barrier coating (TBC) having a composition of 7% by weight yttria stabilized zirconia (7-YSZ). Similarly prepared Rene 142 coupons without the initial nickel plating layer were prepared as controls. After PtAl coating, the control coupons were coated with 0.005 mils of PVD-applied 7-YSZ TBC. All control coupons were tested by thermally cycling from room temperature to about 2075°F (1135°C). Each thermal cycle consisted of heating the coupons for about 45 minutes to about 2075°F followed by 15 minutes of air cooling. The control coupons, without the nickel plating layer, survived an average of about 380 cycles, at which time the TBC spalled from the surface due to thermal stresses and oxidation. The Rene 142 coupons with the Ni + PtAl coating system survived an average of 367 cycles until spallation of the TBC, which is statistically identical to the life of the control samples.

### Example 3

Other Rene 142 coupons, prepared in the manner of the coupons of Example 2, were tested for environmental resistance using a combustion rig. The samples were rapidly heated within a Mach 0.8 jet of hot combustion gases to about 1700°F (927°C) and held for about 10 minutes. The temperature was then ramped up to about 2075°F (1135°C) and held for about 5 minutes. The coupons were then cooled to room temperature for 75 seconds before repeating the cycle. A solution of sodium sulfate at 2 g/liter was continuously injected into the stream of combustion gases at 5.4 ml/min to induce hot corrosion attack of the coated coupons. The Rene 142 + PtAl control coupons exhibited coating degradation within 720 cycles. The Rene 142 coupons having the Ni + PtAl coatings failed at about 640 cycles, which again is not statistically different from the control coupons.

### Example 4

Several Rene 142 turbine blades were chemically stripped of their standard PtA1 coating after operating in an aircraft engine. After stripping of the coatings from the blades, the blades were measured for wall thickness at numerous locations using a micro-focus X-ray inspection apparatus. Three blades were recoated using the Ni + PtAl system as described in Examples 2 and 3, except that the thickness of the nickel electroplated layer on the turbine blades averaged about 0.0025 inches thick, and in some locations was up to 0.006 inches thick. One blade was recoated with a standard PtA1 coating to use as a control. After recoating, the blades were heated in an air furnace to about 2050°F (1121°C) for about 47 hours to simulate thermal exposure from engine operation and to promote diffusion of the coatings into the substrates. Each of the blades was again chemically stripped of its coatings and the micro-focus X-ray wall thickness measurements were repeated at the same locations as the first measurements. The control blade with standard PtAl coating was found in all cases to lose wall thickness, the average loss being greater than about 8%. The three blades with the Ni + PtAl system were found to have an average wall thickness loss of about only 2%. In several locations, the Ni + PtAl system was found to have no wall thickness loss or an actual increase in wall thickness. This data validates the repairable features of this coating system.

Nickel plating of the turbine blades to a thickness in the range of 0.0025 to 0.006 inches followed by an overaluminiding operation surprisingly provided an acceptable microstructure with a reduced loss of wall thickness, without any of the expected void formation after thermal exposure. In certain locations, the thick electroplated nickel even produced an unexpected increase in the wall thickness of the blade. In order to minimize the loss of wall thickness of the part, and perhaps to recover lost wall thickness, it is preferred that the elemental plating be applied over the substrate to a thickness of 0.0005-0.005 inches. A subsequent platinum plating as discussed previously is optional. Aluminiding can be accomplished by any established method.

Although the present invention has been described in connection with specific examples and embodiments, those skilled in the art will recognize that the present invention is capable of other variations and modifications within its scope. These examples and embodiments are intended as typical of, rather than in any way limiting on, the scope of the present invention as presented in the appended claims.

## Claims

1. A method for repairing a superalloy turbine component removed from gas turbine service, comprising:
removing oxidation and corrosion products from the exposed surfaces of the component under repair;
removing existing aluminide coatings from the exposed surfaces of the component under repair;
then, coating the superalloy substrate by depositing a layer of an element matched to the superalloy substrate, the coating layer being of a thickness such that voids do not form within the coating upon further thermal processing;
then, forming a diffusion aluminide coating by exposing the coated surface to a gaseous aluminum using additional elevated temperature thermal processing.

2. The method of claim 1 in which (1) the superalloy substrate is a nickel-based superalloy substrate and the element deposited on the surface of the superalloy substrate is nickel, or (2) the superalloy substrate is a cobalt -based superalloy substrate and the element deposited on the surface of the superalloy substrate is cobalt.

3. The method of claim 2 wherein the nickel or cobalt is applied to a maximum thickness of about 0.006 inches.

4. The method of claim 3 wherein the nickel or cobalt is applied to a thickness of between 0.0005-0.002 inches.

5. The method of any one of claims 2 to 4 wherein a diffusion aluminide coating is formed over the deposited nickel or cobalt by exposing the coated substrate to a gaseous aluminum phase at a preselected elevated temperature for a preselected time.

6. The method of claim 5 wherein the preselected temperature is between 1850°F (1010°C) to about 2100°F (1049°C) and the preselected time is at least one hour.

7. The method of claim 6 wherein the preselected temperature is 1950 ± 25°F (1066 ± 14°C) for a period of time of 5-6 hours.

8. The method of claim 3 further including the steps of
coating the deposited nickel or cobalt with up to 0.0005 inches of platinum; then diffusing the platinum in a protective atmosphere at an elevated temperature for a time sufficient to diffuse the platinum within the nickel;
forming a diffusion aluminide over the deposited platinum and nickel by exposing the coated substrate to a gaseous aluminum phase at a preselected elevated temperature for a preselected time.

9. The method of claim 8 wherein the deposited nickel or cobalt is coated with platinum having a thickness of about 0.0001-0.0003 inches.

10. The method of claim 8 wherein the platinum is diffused at a temperature of about 1700-1975°F (927-1079°C) for a time of about 2 hours.

11. The method of claim 8 wherein the diffusion aluminide is formed over the deposited platinum and nickel or cobalt by exposing the coated substrate to a gaseous aluminum phase at a temperature of 1950 ± 25°F (1066 ± 14°C) for a of time of 5-6 hours.

12. A nickel-based superalloy turbine component for use in a gas turbine engine, comprising:
a nickel-based superalloy base material substrate;
a high purity diffusion aluminide coating, the high purity coating being substantially free of elements that reduce environmental resistance, the coating overlying the superalloy base material and by first depositing a layer of Ni to coat the surface of the component, then forming the diffusion aluminide coating on the surface of the substrate by exposing the coated substrate surface to an aluminum source at an elevated temperature, so that the diffusion aluminide coating is substantially formed by the diffusion of aluminum into the layer coating the surface of the component so that the amount of material from the superalloy base material substrate reacting with the aluminum source to form the diffusion aluminide coating is substantially reduced and the dimensional and chemical integrity of the superalloy base material substrate is substantially maintained.

13. A cobalt-based superalloy turbine component for use in a gas turbine engine, comprising:
a cobalt-based superalloy base material substrate;
a high purity diffusion aluminide coating, the high purity coating being substantially free of elements that reduce environmental resistance, the coating overlying the superalloy base material and by first depositing a layer of Co to coat the surface of the component, then forming the diffusion aluminide coating on the surface of the substrate by exposing the coated substrate surface to an aluminum source at an elevated temperature, so that the diffusion aluminide coating is substantially formed by the diffusion of aluminum into the layer coating the surface of the component so that the amount of material from the superalloy base material substrate reacting with the aluminum source to form the diffusion aluminide coating is substantially reduced and the dimensional and chemical integrity of the superalloy base material substrate is substantially maintained.

14. The cobalt-based superalloy component of claim 12 or claim 13 wherein the high purity coating is substantially free of elements selected from the group consisting of Ta, Ti, W, Mo, S and combinations thereof.
